(19) Europäisches Patentamt
European Patent Office
Office européen des brevets

(11) EP 1 240 219 B1

(12) EUROPÄISCHE PATENTSCHRIFT

(45) Veröffentlichungstag und Bekanntmachung des Hinweises auf die Patenterteilung:
**25.08.2004 Patentblatt 2004/35**

(21) Anmeldenummer: **00987270.6**

(22) Anmeldetag: **18.11.2000**

(51) Int Cl.⁷: **C08F 220/18**, C10M 145/10

(86) Internationale Anmeldenummer:
**PCT/EP2000/011500**

(87) Internationale Veröffentlichungsnummer:
**WO 2001/040334 (07.06.2001 Gazette 2001/23)**

(54) **MITTELS ATRP-VERFAHREN ERHÄLTLICHE COPOLYMERE SOWIE VERFAHREN ZUR HERSTELLUNG UND VERWENDUNG**

COPOLYMERS WHICH CAN BE OBTAINED USING ATRP METHODS, AND METHOD FOR PRODUCING AND USING THE SAME

COPOLYMERES OBTENUS PAR PROCEDES DE POLYMERISATION DE RADICAUX PAR TRANSFERT D'ATOMES (PRTA) ET PROCEDES PERMETTANT DE LES PREPARER ET DE LES UTILISER

(84) Benannte Vertragsstaaten:
**AT BE CH CY DE DK ES FI FR GB GR IE IT LI LU MC NL PT SE TR**

(30) Priorität: **30.11.1999 US 450745**

(43) Veröffentlichungstag der Anmeldung:
**18.09.2002 Patentblatt 2002/38**

(73) Patentinhaber: **RohMax Additives GmbH
64293 Darmstadt (DE)**

(72) Erfinder:
- **SCHERER, Markus
66822 Lebach (DE)**
- **SOUCHIK, Joan
Blue Bell, PA 19422 (US)**

(56) Entgegenhaltungen:
**EP-A- 0 153 209**
**WO-A-97/18247**
**WO-A-97/34940**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 240 219 B1

Printed by Jouve, 75001 PARIS (FR)

## Beschreibung

Die vorliegende Erfindung betrifft mittels ATRP-Verfahren erhältliche Copolymere, Konzentrate und Schmieröle, die diese Copolymere aufweisen, Verfahren zur Herstellung dieser Copolymere sowie deren Verwendung als Stockpunktserniedriger.

Schmieröle, insbesondere Mineralöle, die beispielsweise durch Destillation aus Erdölen gewonnen werden, enthalten in der Regel langkettige n-Alkane, die einerseits ein gutes Viskositäts-/Temperaturverhalten bewirken, andererseits aber beim Abkühlen in kristalliner Form ausfallen und dadurch das Fließen der Öle beeinträchtigen oder völlig verhindern ("stocken"). Eine Verbesserung der Tieftemperaturfließeigenschaften kann beispielsweise durch Entparaffinierung erreicht werden. Allerdings steigen die Kosten erheblich an, wenn eine vollständige Entparaffinierung erzielt werden soll. Daher wird ein Pourpoint bis zu einem Bereich von ca. -15°C durch partielle Entparaffinierung erzielt, der durch Zugabe von sogenannten Pourpoint-Erniedrigern oder Stockpunktverbesserern, weiter herabgesetzt werden kann. Diese Mittel können bereits in Konzentrationen von 0,01 bis 1 Gew.-% den Stockpunkt wirksam herabsetzen.

Die Wirkungsweise dieser Verbindungen ist noch nicht vollständig aufgeklärt. Allerdings wird angenommen, daß paraffinähnliche Verbindungen in die wachsenden Paraffinkristallflächen eingebaut werden und so verhindern, daß eine weitere Kristallisation und insbesondere die Bildung von ausgedehnten Kristallverbänden eintritt.

Eine stockpunktverbessernde Wirkung bestimmter Strukturelemente ist bekannt. So zeigen insbesondere Polymere mit ausreichend langen Alkylseitenketten eine pourpoint- und fließverbessernde Wirkung. Hierbei wird angenommen, daß diese Alkylgruppen in die wachsenden Paraffinkristalle eingebaut werden und das Kristallwachstum stören (Vergleiche Ullmanns Enzyklopädie der technischen Chemie, 4. Auflage, Band 20, Verlag Chemie, 1981, S. 548). Von technisch anwendbaren Pourpointerniedrigern muß darüber hinaus verlangt werden, daß sie gute thermische, oxidative und chemische Stabilität, Scherfestigkeit usw. besitzen. Darüber hinaus sollten die Stockpunkt- und Fließverbesserer kostengünstig herstellbar sein, da sie in großen Mengen eingesetzt werden.

Poly(meth)acrylate mit langkettigen Alkylresten werden weithin als Stockpunkterniedrgier bzw. Fließverbesserer eingesetzt. Diese Verbindungen sind beispielsweise in US-PS 2 091 627, US-PS 2 100 993, US-PS 2 114 233 und EP-A-0 236 844 beschrieben. Im allgemeinen werden diese Pourpoint-Erniedriger durch radikalische Polymerisation erhalten. Dementsprechend können sie kostengünstig hergestellt werden. Ihre Tieftemperatureigenschaften, die sich beispielsweise aus den Stockpunkten gemäß ASTM D-97, den Minirotationsviskosimetrie-Versuchswerten gemäß ASTM D-4684 oder den Scanning-Brookfieldresultaten gemäß ASTM D-5133 ergeben, sind für vielen Anwendungen brauchbar, trotzdem genügen die Tieftemperatureigenschaften vielen Anforderungen noch nicht.

Hierbei sollte berücksichtigt werden, daß wirksamere Additive in einer geringeren Menge zugegeben werden könnten, um eine gewünschte Fließeigenschaft bei tiefen Temperaturen zu erzielen. Bei den eingesetzten Mengen an Schmierölen und Biodieselkraftstoffen ergäben sich auch bei relativ geringen Unterschieden erhebliche Einsparpotentiale.

In Anbetracht des Standes der Technik ist es nun Aufgabe der vorliegenden Erfindung Additive zur Verfügung zu stellen, durch die im Vergleich zu herkömmlichen Zusätzen verbesserte Fließeigenschaften von Schmierölen und Biodieselkraftstoffen bei tiefen Temperaturen erzielt werden können. Des weiteren war Aufgabe der vorliegenden Erfindung Additive zur Verfügung zu stellen, die eine hohe Stabilität gegen Oxidation und thermische Belastung sowie eine hohe Scherfestigkeit besitzen. Zugleich sollten die neuen Additive einfach und kostengünstig herstellbar sein.

Gelöst werden diese sowie weitere nicht explizit genannte Aufgaben, die jedoch aus den hierin einleitend diskutierten Zusammenhängen ohne weiteres ableitbar oder erschließbar sind, durch ein Copolymer mit allen Merkmalen des Patentanspruchs 1. Zweckmäßige Abwandlungen der erfindungsgemäßen Copolymere werden in den auf Anspruch 1 rückbezogenen Ansprüchen unter Schutz gestellt. Hinsichtlich des Konzentrats als Schmieröladditiv liefert Anspruch 4 die Lösung der zugrunde liegenden Aufgabe, während Ansprüche 6 und 9 Schmieröle bzw. Biodieselkraftstoffe schützen, die erfindungsgemäße Copolymere aufweisen. Bezüglich des Verfahrens zur Herstellung von Copolymeren und deren Verwendung stellen die Ansprüche 11 und 14 eine Lösung des Problems dar.

Dadurch, daß man ethylenisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert, wobei die Mischung der ethylenisch ungesättigten Monomeren aus

a) 0 bis 40 Gew.-% einer oder mehreren ethylenisch ungesättigten Esterverbindungen der Formel (I)

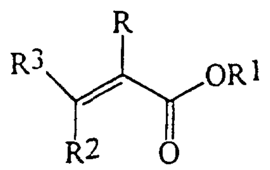

(I),

worin R Wasserstoff oder Methyl darstellt, $R^1$ einen linearen oder verzweigten Alkylrest mit 1 bis 5 Kohlenstoffatomen bedeutet, $R^2$ und $R^3$ unabhängig Wasserstoff oder eine Gruppe der Formel -COOR' darstellen, worin R' Wasserstoff oder eine Alkylgruppe mit 1 bis 5 Kohlenstoffatomen bedeutet,

b) 10 bis 98 Gew.-% einer oder mehreren ethylenisch ungesättigten Esterverbindungen der Formel (II)

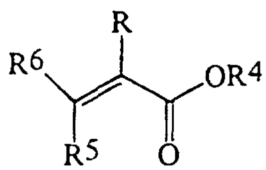

(II),

worin R Wasserstoff oder Methyl darstellt, $R^4$ einen linearen oder verzweigten Alkylrest mit 6 bis 15 Kohlenstoffatomen bedeutet, $R^5$ und $R^6$ unabhängig Wasserstoff oder eine Gruppe der Formel -COOR'' darstellen, worin R'' Wasserstoff oder eine Alkylgruppe mit 6 bis 15 Kohlenstoffatomen bedeutet,

c) 0 bis 80 Gew.-% einer oder mehreren ethylenisch ungesättigten Esterverbindungen der Formel (III)

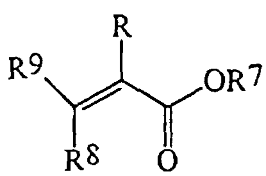

(III),

worin R Wasserstoff oder Methyl darstellt, $R^7$ einen linearen oder verzweigten Alkylrest mit 16 bis 30 Kohlenstoffatomen bedeutet, $R^8$ und $R^9$ unabhängig Wasserstoff oder eine Gruppe der Formel -COOR''' darstellen, worin R''' Wasserstoff oder eine Alkylgruppe mit 16 bis 30 Kohlenstoffatomen bedeutet,

d) 0 bis 50 Gew.-% Comonomer besteht,

wobei sich die Angabe Gew.-% jeweils auf das Gesamtgewicht der ethylenisch ungesättigten Monomere bezieht, sind Copolymere erhältlich, die eine hohe Wirksamkeit als Stockpunktverbesserer oder Fließverbesserer aufweisen. Die stockpunktsverbessernde Wirkung kann beispielsweise gemäß ASTM D 97 bestimmt werden.

Darüber hinaus zeigen Schmieröle, die die erfindungsgemäßen Copolymere umfassen, hervorragende Minirotationsviskosimetriewerte (MRV), die gemäß ASTM D 4684 erhalten werden können, und Scanning-Brookfieldresultate, wie diese sich nach ASTM D 5133 ergeben.

Biodieselkraftstoffe, die einen Gehalt an Copolymeren der vorliegenden Erfindung aufweisen, zeigen bei Cold-Filter-Plugging-Point-Messungen nach IP 309 oder Low-Temperature-Flow-Test-Versuchen gemäß ASTM D 4539 außergewöhnliche Resultate.

Falls ein bestimmte Fließeigenschaften bei einer vorgegebenen Temperatur erzielt werden sollen, so kann die Menge an Additiv durch die vorliegende Erfindung vermindert werden.

Zugleich lassen sich durch die erfindungsgemäßen Copolymere eine Reihe weiterer Vorteile erzielen. Hierzu gehören u.a.:

⇒ Die Copolymere der vorliegenden Erfindung zeigen eine enge Molekulargewichtsverteilung. Hierdurch zeigen sie eine hohe Stabilität gegen Schereinwirkungen.

⇒ Die erfindungsgemäßen Copolymere können kostengünstig hergestellt werden.

⇒ Die Copolymere zeigen eine hohe Oxidationsstabilität und sind chemisch sehr beständig.

Copolymere sind an sich bekannt und bezeichnen Polymere, die durch Polymerisation von zwei oder mehr verschiedenartigen Monomeren erhalten werden. Hierbei ist der Begriff weit zu verstehen, so daß statistische Copolymere, Block-Copolymere, die zwei, drei oder mehr Blöcke aufweisen, Pfropfcopolymere und Gradientenpolymere hiervon erfaßt werden.

Die Zusammensetzungen, aus denen die erfindungsgemäßen Copolymere erhalten werden, enthalten insbesondere (Meth)acrylate, Maleate und Fumarate, die unterschiedliche Alkoholreste aufweisen. Der Ausdruck (Meth) acrylate umfaßt Methacrylate und Acrylate sowie Mischungen aus beiden. Diese Monomere sind weithin bekannt. Hierbei kann der Alkylrest linear, cyclisch oder verzweigt sein.

Mischungen, aus denen die erfindungsgemäßen Copolymere erhältlich sind, können 0 bis 40 Gew.-%, insbesondere 0,5 bis 20 Gew.-% einer oder mehreren ethylenisch ungesättigten Esterverbindungen der Formel (I) enthalten

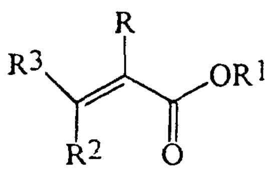 (I),

worin R Wasserstoff oder Methyl darstellt, $R^1$ einen linearen oder verzweigten Alkylrest mit 1 bis 5 Kohlenstoffatomen bedeutet, $R^2$ und $R^3$ unabhängig Wasserstoff oder eine Gruppe der Formel -COOR' darstellen, worin R' Wasserstoff oder eine Alkylgruppe mit 1 bis 5 Kohlenstoffatomen bedeutet.

Beispiele für Komponente a) sind unter anderem (Meth)acrylate, Fumarate und Maleate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat und Pentyl(meth)acrylat; Cycloalkyl(meth)acrylate, wie Cyclopentyl(meth)acrylat; (Meth)acrylate, die sich von ungesättigten Alkoholen ableiten, wie 2-Propinyl(meth)acrylat, Allyl(meth)acrylat und Vinyl(meth)acrylat.

Als wesentlichen Bestandteil enthalten die zu polymerisierenden Zusammensetzungen 10 bis 98 Gew.-%, insbesondere 20 bis 95 Gew.-% einer oder mehreren ethylenisch ungesättigten Esterverbindungen der Formel (II)

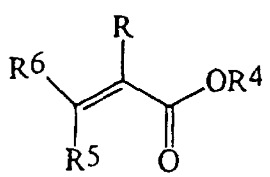 (II),

worin R Wasserstoff oder Methyl darstellt, $R^4$ einen linearen oder verzweigten Alkylrest mit 6 bis 15 Kohlenstoffatomen bedeutet, $R^5$ und $R^6$ unabhängig Wasserstoff oder eine Gruppe der Formel -COOR" darstellen, worin R" Wasserstoff oder eine Alkylgruppe mit 6 bis 15 Kohlenstoffatomen bedeutet.

Zu diesen gehören unter anderem (Meth)acrylate, Fumarate und Maleate, die sich von gesättigten Alkoholen ableiten, wie Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat; (Meth)acrylate, die sich von ungesättigten Alkoholen ableiten, wie z. B. Oleyl(meth)acrylat; Cycloalkyl(meth)acrylate, wie 3-Vinylcyclohexyl(meth)acrylat, Cyclohexyl(meth)acrylat, Bornyl(meth)acrylat; sowie die entsprechenden Fumarate und Maleate.

Darüber hinaus können die erfindungsgemäß zu verwendenden Monomermischungen 0 bis 80 Gew.-%, vorzugsweise 0,5 bis 60 Gew.-% einer oder mehreren ethylenisch ungesättigten Esterverbindungen der Formel (III) aufweisen

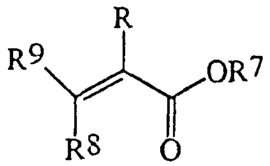

(III),

worin R Wasserstoff oder Methyl darstellt, $R^7$ einen linearen oder verzweigten Alkylrest mit 16 bis 30 Kohlenstoffatomen bedeutet, $R^8$ und $R^9$ unabhängig Wasserstoff oder eine Gruppe der Formel -COOR''' darstellen, worin R''' Wasserstoff oder eine Alkylgruppe mit 16 bis 30 Kohlenstoffatomen bedeutet.

Beispiele für Komponente c) sind unter anderem (Meth)acrylate, die sich von gesättigten Alkoholen ableiten, wie Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth) acrylat, Docosyl(meth)acrylat und/oder Eicosyltetratriacontyl(meth)acrylat; Cycloalkyl(meth)acrylate, wie 2,4,5-Tri-t-butyl-3-Vinylcyclohexyl(meth)acrylat, 2,3,4,5-Tetra-t-butylcyclohexyl(meth)acrylat; Oxiranylmethacrylate, wie 10,11-Epoxyhexadecylmethacrylat; sowie die entsprechenden Fumarate und Maleate.

Die Esterverbindungen mit langkettigem Alkoholrest, insbesondere die Komponenten (b) und (c), lassen sich beispielsweise durch Umsetzen von (Meth)acrylaten, Fumaraten, Maleaten und/oder den entsprechenden Säuren mit langkettigen Fettalkoholen erhalten, wobei im allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911 und Oxo Alcohol® 7900, Oxo Alcohol® 1100 von Monsanto; Alphanol® 79 von ICI; Nafol® 1620, Alfol® 610 und Alfol® 810 von Condea; Epal® 610 und Epal® 810 von Ethyl Corporation; Linevol® 79, Linevol® 911 und Dobanol® 25L von Shell AG; Lial 125 von Augusta® Mailand; Dehydad® und Lorol® von Henkel KGaA sowie Linopol® 7 - 11 und Acropol® 91 Ugine Kuhlmann.

Von den ethylenisch ungesättigten Esterverbindungen sind die (Meth)acrylate gegenüber den Maleaten und Fumaraten besonders bevorzugt, d.h. $R^2$, $R^3$, $R^5$, $R^6$, $R^8$ und $R^9$ der Formeln (I), (II) und (III) stellen in besonders bevorzugten Ausführungsformen Wasserstoff dar.

Die Komponente d) umfaßt insbesondere ethylenisch ungesättigte Monomere, die sich mit den ethylenisch ungesättigten Esterverbindungen der Formeln (I), (II) und/oder (III) copolymerisieren lassen.

Jedoch sind Comonomere zur Polymerisation gemäß der vorliegenden Erfindung besonders geeignet, die der Formel entsprechen:

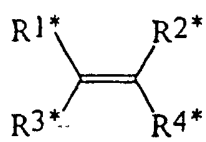

worin $R^{1+}$ und $R^{2+}$ unabhängig ausgewählt sind aus der Gruppe bestehend aus Wasserstoff, Halogene, CN, lineare oder verzweigte Alkylgruppen mit 1 bis 20, vorzugsweise 1 bis 6 und besonders bevorzugt 1 bis 4 Kohlenstoffatomen, welche mit 1 bis (2n+1) Halogenatomen substituiert sein können, wobei n die Zahl der Kohlenstoffatome der Alkylgruppe ist (beispielsweise $CF_3$), α, β- ungesättigte lineare oder verzweigte Alkenyl- oder Alkynylgruppen mit 2 bis 10, vorzugsweise von 2 bis 6 und besonders bevorzugt von 2 bis 4 Kohlenstoffatomen, welche mit 1 bis (2n-1) Halogenatomen, vorzugsweise Chlor, substituiert sein können, wobei n die Zahl der Kohlenstoffatome der Alkylgruppe, beispielsweise $CH_2$=CCl-, ist, Cycloalkylgruppen mit 3 bis 8 Kohlenstoffatomen, welche mit 1 bis (2n-1) Halogenatomen, vorzugsweise Chlor, substituiert sein können, wobei n die Zahl der Kohlenstoffatome der Cycloalkylgruppe ist; $C(=Y^*)R^{5+}$, $C(=Y^*)NR^{6+}R^{7+}$, $Y^*C(=Y^*)R^{5+}$, $SOR^{5+}$, $SO_2R^{5+}$, $OSO_2R^{5+}$, $NR^{8+}SO_2R^{5+}$, $PR^{5+}{}_2$, $P(=Y^*)R^{5+}{}_2$, $Y\text{-}PR^{5+}{}_2$, $Y^*P(=Y^*)R^{5+}{}_2$, $NR^{8+}{}_2$ welche mit einer zusätzlichen $R^{8+}$-, Aryl- oder Heterocyclyl-Gruppe quaternärisiert sein kann, wobei Y* $NR^{8+}$, S oder O, vorzugsweise O sein kann; $R^{5+}$ eine Alkylgruppe mit 1 bis 20 Kohlenstoffatomen, eine Alkylthio mit 1 bis 20 Kohlenstoffatomen, $OR^{15}$ ($R^{15}$ ist Wasserstoff oder ein Alkalimetall), Alkoxy von 1 bis 20 Kohlenstoffatomen, Aryloxy oder Heterocyklyloxy ist; $R^{6+}$ und $R^{7+}$ unabhängig Wasserstoff oder eine Alkylgruppe mit 1 bis 20 Kohlenstoffatomen sind, oder $R^{6+}$ und $R^{7+}$ können zusammen eine Alkylengruppe mit 2 bis 7 vorzugsweise 2 bis 5 Kohlenstoffatomen bilden, wobei sie einen 3 bis 8-gliedrigen, vorzugsweise 3 bis 6-gliedrigen Ring bilden, und $R^{8+}$ Wasserstoff, lineare oder verzweigte Alkyl- oder Arylgruppen mit 1 bis 20 Kohlenstoffatomen sind;

$R^{3+}$ und $R^{4+}$ unabhängig ausgewählt aus der Gruppe bestehend aus Wasserstoff, Halogen (vorzugsweise Fluor oder Chlor), Alkylgruppen mit 1 bis 6 Kohlenstoffatomen und $COOR^{9+}$, worin $R^{9+}$ Wasserstoff, ein Alkalimetall oder eine Alkylgruppe mit 1 bis 40 Kohlenstoffatomen ist, sind, oder $R^{1+}$ und $R^{3+}$ können zusammen eine Gruppe der Formel $(CH_2)_n$, bilden, welche mit 1 bis 2n' Halogenatomen oder $C_1$ bis $C_4$ Alkylgruppen substituiert sein kann, oder der Formel C(=O)-Y*-C(=O) bilden, wobei n' von 2 bis 6, vorzugsweise 3 oder 4 ist und Y* wie zuvor definiert ist; und wobei zumindest 2 der Reste $R^{1+}$, $R^{2+}$, $R^{3+}$ und $R^{4+}$ Wasserstoff oder Halogen sind.

Hierzu gehören unter anderem Hydroxylalkyl(meth)acrylate, wie 3-Hydroxypropylmethacrylat, 3,4-Dihydroxybutylmethacrylat, 2-Hydroxyethylmethacrylat, 2-Hydroxypropylmethacrylat, 2,5-Dimethyl-1,6-hexandiol(meth)acrylat, 1,10-Decandiol(meth)acrylat;

Aminoalkyl(meth)acrylate, wie N-(3-Dimethylaminopropyl)methacrylamid, 3-Diethylaminopentylmethacrylat, 3-Dibutylaminohexadecyl(meth)acrylat;

Nitrile der (Meth)acrylsäure und andere stickstoffhaltige Methacrylate, wie N-(Methacryloyloxyethyl)diisobutylketimin, N-(Methacryloyloxyethyl)dihexadecylketimin, Methacryloylamidoacetonitril, 2-Methacryloyloxyethylmethylcyanamid, Cyanomethylmethacrylat;

Aryl(meth)acrylate, wie Benzylmethacrylat oder Phenylmethacrylat, wobei die Arylreste jeweils unsubstituiert oder bis zu vierfach substituiert sein können;

carbonylhaltige Methacrylate, wie 2-Carboxyethylmethacrylat, Carboxymethylmethacrylat, Oxazolidinylethylmethacrylat, N-(Methacryloyloxy)formamid, Acetonylmethacrylat, N-Methacryloylmorpholin, N-Methacryloyl-2-pyrrolidinon, N-(2-Methacryloyloxyethyl)-2-pyrrolidinon, N-(3-Methacryloyloxypropyl)-2-pyrrolidinon, N-(2-Methacryloyloxypentadecyl)-2-pyrrolidinon, N-(3-Methacryloyloxyheptadecyl)-2-pyrrolidinon;

Glycoldimethacrylate, wie 1,4-Butandiolmethacrylat, 2-Butoxyethylmethacrylat, 2-Ethoxyethoxymethylmethacrylat, 2-Ethoxyethylmethacrylat;

Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat; Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-Iodoethylmethacrylat, Chloromethylmethacrylat;

Oxiranylmethacrylate, wie 2,3-Epoxybutylmethacrylat, 3,4-Epoxybutylmethacrylat, 10,11-Epoxyundecylmethacrylat, 2,3-Epoxycyclohexylmethacrylat; Glycidylmethacrylat;

Phosphor-, Bor- und/oder Silicium-haltige Methacrylate, wie 2-(Dimethylphosphato)propylmethacrylat, 2-(Ethylenphosphito)propylmethacrylat, Dimethylphosphinomethylmethacrylat, Dimethylphosphonoethylmethacrylat, Diethylmethacryloylphosphonat, Dipropylmethacryloylphosphat, 2-(Dibutylphosphono)ethylmethacrylat, 2,3-Butylenmethacryloylethylborat, Methyldiethoxymethacryloylethoxysilan, Diethylphosphatoethylmethacrylat;

schwefelhaltige Methacrylate, wie Ethylsulfinylethylmethacrylat, 4-Thiocyanatobutylmethacrylat, Ethylsulfonylethylmethacrylat, Thiocyanatomethylmethacrylat, Methylsulfinylmethylmethacrylat, Bis(methacryloyloxyethyl)sulfid;

Trimethacrylate, wie Trimethyloylpropantrimethacrylat; Vinylhalogenide, wie beispielsweise Vinylchlorid, Vinylfluorid, Vinylidenchlorid und Vinylidenfluorid;

heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon;

Vinylester, wie Vinylacetat;

Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltuluol und p-Methylstyrol, halogenierte Styrole, wie beispielsweise Monochlorstyrole, Dichlorstyrole, Tribromstyrole und Tetrabromstyrole;

Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;

Vinyl- und Isoprenylether;

Maleinsäure und Maleinsäurederivate, wie beispielsweise Mono- und Diester der Maleinsäure, Maleinsäureanhydrid, Methylmaleinsäureanhydrid, Maleinimid, Methylmaleinimid;

Fumarsäure und Fumarsäurederivate, wie beispielsweise Mono- und Diester der Fumarsäure;

Diene wie beispielsweise Divinylbenzol.

Ganz besonders bevorzugte Mischungen weisen Methylmethacrylat, Butylmethacrylat, Laurylmethacrylat, Stearylmethacrylat und/oder Styrol auf.

Diese Komponenten können einzeln oder als Mischungen eingesetzt werden. Voraussetzung ist allerdings,

daß mindestens zwei verschiedene Monomere polymerisiert werden.

Diese Komponenten können gleichzeitig oder sequentiell einer Reaktionsmischung zugegeben werden, um erfindungsgemäße Copolymere zu erhalten. Je nach Art der Zugabe entstehen statistische Copolymere, Gradientencopolymere, Pfropfcopolymere und Blockcopolymere.

Um statistische Copolymere zu erhalten werden vielfach Mischungen vorgelegt, die alle zu polymerisierenden Monomere aufweisen. Auch eine kontinuierliche oder chargenweise Zugabe von Monomermischungen ist denkbar, wobei deren Zusammensetzungen über den Zeitraum der Zugabe im allgemeinen konstant gehalten wird, um eine statistische Verteilung der einzelnen Bausteine im Copolymeren zu gewährleisten.

Neben statistischen Copolymeren können gemäß dem Verfahren der vorliegenden Erfindung auch Gradienten- und Blockcopolymere erhalten werden, indem man die Zusammensetzung der Monomeren, also die relative Konzentration der verschiedenen Monomere zueinander während der Polymerisation variiert.

Blockcopolymere können dadurch erhalten werden, daß man verschiedene Monomere oder Mischungen von Monomeren chargenweise der Reaktionsmischung zugibt. Hierbei sollte der lebende Charakter von ATRP-Verfahren berücksichtigt werden, so daß die Reaktion zwischen der Zugabe der verschiedenen Monomere bzw. Mischungen von Monomeren über einen längeren Zeitraum unterbrochen werden kann. Ein ähnliches Ergebnis kann auch dadurch erzielt werden, daß man bei einer kontinuierlichen Zugabe von Monomeren deren Zusammensetzungen zu bestimmten Zeitpunkten sprunghaft ändert.

Gradientencopolymere sind Copolymere, z. B. aus 2 Monomeren A u. B, in deren Einzelketten ein Gradient der Verteilung der Monomerbausteine entlang den Ketten besteht. So ist das eine Kettenende reich an A- u. das andere reich an B-Bausteinen. Diese Polymere sind durch ATRP-Verfahren leicht darstellbar, da diese einen lebenden Charakter hat. Somit können Gradientencopolymere durch kontinuierliche Variation der während der Polymerisation zugegebenen Monomermischung erhalten werden. Vorzugsweise werden hierbei die über die einzelnen Ketten variierenden Monomere über verschiedene Zuleitungen der Reaktionsmischung zugegeben.

Die zuvor genannten Monomere werden mittels Initiatoren, die eine übertragbare Atomgruppe aufweisen, polymerisiert. Im allgemeinen lassen sich diese Initiatoren durch die Formel $Y\text{-}(X)_m$ beschreiben, worin Y das Kernmolekül darstellt, von dem angenommen wird, daß es Radikale bildet, X ein übertragbares Atom oder eine übertragbare Atomgruppe repräsentiert und m eine ganze Zahl im Bereich von 1 bis 10 darstellt, abhängig von der Funktionalität der Gruppe Y. Falls m > 1 ist, können die verschiedenen übertragbaren Atomgruppen X eine unterschiedliche Bedeutung haben.

Ist die Funktionalität des Initiators > 2, so werden sternförmige Polymere erhalten. Bevorzugte übertragbare Atome bzw. Atomgruppen sind Halogene, wie beispielsweise Cl, Br und/oder J.

Wie zuvor erwähnt, wird von der Gruppe Y angenommen, daß sie Radikale bildet, die als Startmolekül dienen, wobei sich dieses Radikal an die ethylenisch ungesättigten Monomere anlagert. Daher weist die Gruppe Y vorzugsweise Substituenten auf, die Radikale stabilisieren können. Zu diesen Substituenten gehören unter anderem -CN, -COR und $-CO_2R$, wobei R jeweils ein Alkyl- oder Arylrest darstellt, Aryl- und/oder Heteroaryl-Gruppen.

Alkylreste sind gesättigte oder ungesättigte, verzweigte oder lineare Kohlenwasserstoffreste mit 1 bis 40 Kohlenstoffatomen, wie beispielsweise Methyl, Ethyl, Propyl, Butyl, Pentyl, 2-Methylbutyl, Pentenyl, Cyclohexyl, Heptyl, 2-Methylheptenyl, 3-Methylheptyl, Octyl, Nonyl, 3-Ethylnonyl, Decyl, Undecyl, 4-Propenylundecyl, Dodecyl, Tridecyl, Tetradecyl, Pentadecyl, Hexadecyl, Heptadecyl, Octadecyl, Nonadecyl, Eicosyl, Cetyleicosyl, Docosyl und/oder Eicosyltetratriacontyl.

Arylreste sind cyclische, aromatische Reste, die 6 bis 14 Kohlenstoffatome im aromatischen Ring aufweisen. Diese Reste können substituiert sein. Substituenten sind beispielsweise lineare und verzweigte Alkylgruppen mit 1 bis 6 Kohlenstoffatome, wie beispielsweise Methyl, Ethyl, Propyl, Butyl, Pentyl, 2-Methylbutyl oder Hexyl; Cycloalkylgruppen, wie beispielsweise Cyclopentyl und Cyclohexyl; armoatische Gruppen, wie Phenyl oder Nahphthyl; Aminogruppen, Ethergruppen, Estergruppen sowie Halogenide.

Zu den aromatischen Resten gehören beispielsweise Phenyl, Xylyl, Toluyl, Naphtyl oder Biphenylyl.

Der Ausdruck "Heteroaryl" kennzeichnet ein heteroaromatisches Ringsystem, worin mindestens eine CH-Gruppe durch N oder zwei benachbarte CH-Gruppen durch S, O oder NH ersetzt sind, wie ein Rest von Thiophen, Furan, Pyrrol, Thiazol, Oxazol, Pyridin, Pyrimidin und Benzo[a]furan, die ebenfalls die zuvor genannten Substituenten aufweisen können.

Ein erfindungsgemäß verwendbarer Initiator kann jede Verbindung sein, die ein oder mehrere Atome oder Atomgruppen aufweist, welche unter den Polymerisationsbedingungen radikalisch übertragbar ist.

Geeignete Initiatoren umfassen jene der Formeln:

$$R^{11}R^{12}R^{13}C\text{-}X$$

$$R^{11}C(=O)\text{-}X$$

$$R^{11}R^{12}R^{13}Si\text{-}X$$

$$R^{11}R^{12}N\text{-}X$$

$$R^{11}N\text{-}X_2$$

$$(R^{11})_nP(O)_m\text{-}X_{3\text{-}n}$$

$$(R^{11}O)_nP(O)_m\text{-}X_{3\text{-}n}$$

und

$$(R^{11})(R^{12}O)P(O)_m\text{-}X,$$

worin X ausgewählt ist aus der Gruppe bestehend aus Cl, Br, I, $OR^{10}$, [wobei $R^{10}$ eine Alkylgruppe von 1 bis 20 Kohlenstoffatomen, wobei jedes Wasserstoffatom unabhängig durch ein Halogenid, vorzugsweise Flurid oder Chlorid ersetzt sein kann, Alkenyl von 2 bis 20 Kohlenstoffatomen, vorzugsweise Vinyl, Alkynyl von 2 bis 10 Kohlenstoffatomen vorzugsweise Acetylenyl, Phenyl, welches mit 1 bis 5 Halogenatomen oder Alkylgruppen mit 1 bis 4 Kohlenstoffatomen substituiert sein kann, oder Aralkyl (arylsubstituiertes Alkyl in welchem die Arylgruppe Phenyl oder substituiertes Phenyl und die Alkylgruppe ein Alkyl mit 1 bis 6 Kohlenstoffatomen darstellt, wie beispielsweise Benzyl) bedeutet;] $SR^{14}$, $SeR^{14}$, $OC(=O)R^{14}$, $OP(=O)R^{14}$, $OP(=O)(OR^{14})_2$, $OP(=O)OR^{14}$, $O\text{-}N(R^{14})_2$, $S\text{-}C(=S)N(R^{14})_2$, CN, NC, SCN, CNS, OCN, CNO und $N_3$ darstellt, wobei $R^{14}$ eine Arylgruppe oder eine lineare oder verzweigte Alkylgruppe mit 1 bis 20, vorzugsweise 1 bis 10 Kohlenstoffatomen bedeutet, wobei zwei $R^{14}$-Gruppen, falls vorhanden, zusammen einen 5, 6 oder 7-gliedrigen heterocyclischen Ring bilden können; und $R^{11}$, $R^{12}$ und $R^{13}$ unabhängig ausgewählt sind aus der Gruppe bestehend aus Wasserstoff, Halogene, Alkylgruppen mit 1 bis 20, vorzugsweise 1 bis 10 und besonders bevorzugt 1 bis 6 Kohlenstoffatomen, Cycloalkylgruppen mit 3 bis 8 Kohlenstoffatomen, $R^{8+}{}_3Si$, $C(=Y^*)R^{5+}$, $C(=Y^*)NR^{6+}R^{7+}$, wobei $Y^*$, $R^{5+}$, $R^{6+}$ und $R^{7+}$ wie zuvor definiert sind, COCl, OH, (vorzugsweise ist einer der Reste $R^{11}$, $R^{12}$ und $R^{13}$ OH), CN, Alkenyl- oder Alkynylgruppen mit 2 bis 20 Kohlenstoffatomen, vorzugsweise 2 bis 6 Kohlenstoffatomen und besonders bevorzugt Allyl oder Vinyl, Oxiranyl, Glycidyl, Alkylen- oder Alkenylengruppen mit 2 bis 6 Kohlenstoffatomen, welche mit Oxiranyl oder Glycidyl, Aryl, Heterocyclyl, Aralkyl, Aralkenyl (arylsubsituiertes Alkenyl, wobei Aryl wie zuvor definiert ist und Alkenyl Vinyl ist, welches mit ein oder zwei $C_1$ bis $C_6$ Alkylgruppen und/oder Halogenatomen, vorzugsweise mit Chlor substituiert ist) substituiert sind, Alkylgruppen mit 1 bis 6 Kohlenstoffatomen, in welchen ein bis alle der Wasserstoffatome, vorzugsweise eines, durch Halogen substituiert sind, (vorzugsweise Fluor oder Chlor, wenn ein oder mehr Wasserstoffatome ersetzt sind, und vorzugsweise Fluor, Chlor oder Brom, falls ein Wasserstoffatom ersetzt ist) Alkylgruppen mit 1 bis 6 Kohlenstoffatomen, die mit 1 bis 3 Substituenten (vorzugsweise 1) ausgewählt aus der Gruppe bestehend aus $C_1$-$C_4$ Alkoxy, Aryl, Heterocyclyl, $C(=Y^*)R^{5+}$ (wobei $R^{5+}$ wie zuvor definiert ist), $C(=Y^*)NR^{6+}R^{7+}$(wobei $R^{6+}$ und $R^{7+}$ wie zuvor definiert sind), Oxiranyl und Glycidyl substituiert sind; (vorzugsweise sind nicht mehr als 2 der Reste $R^{11}$, $R^{12}$ und $R^{13}$ Wasserstoff, besonders bevorzugt ist maximal einer der Reste $R^{11}$, $R^{12}$ und $R^{13}$ Wasserstoff);

m=0 oder 1; und m=0, 1 oder 2 darstellt.

Zu den besonders bevorzugten Initiatoren gehören Benzylhalogenide, wie p-Chlormethylstyrol, α-Dichlorxylol, α,α-Dichlorxylol, α,α-Dibromxylol und Hexakis(α-brommethyl)benzol, Benzylchlorid, Benzylbromid, 1-Brom-1-phenylethan und 1-Chlor-1-phenylethan;

Carbonsäurederivate, die an der α-Position halogeniert sind, wie beispielsweise Propyl-2-brompropionat, Methyl-2-chlorpropionat, Ethyl-2-chlorpropionat, Methyl-2-brompropionat, Ethyl-2-bromisobutyrat; Tosylhalogenide, wie p-Toluolsulfonylchlorid; Alkylhalogenide, wie Tetrachlormethan, Tribrom(meth)an, 1-Vinylethylchlorid, 1-Vinylethylbromid; und Halogenderivate von Phosphorsäureestern, wie Dimethylphosphorsäurechlorid.

Der Initiator wird im allgemeinen in einer Konzentration im Bereich von $10^{-4}$ mol/L bis 3 mol/L, vorzugsweise im Bereich von $10^{-3}$ mol/L bis $10^{-1}$ mol/L und besonders bevorzugt im Bereich von $5*10^{-2}$ mol/L bis $5*10^{-1}$ mol/L ein-

gesetzt, ohne daß hierdurch eine Beschränkung erfolgen soll. Aus dem Verhältnis Initiator zu Monomer ergibt sich das Molekulargewicht des Polymeren, falls das gesamte Monomer umgesetzt wird. Vorzugsweise liegt dieses Verhältnis im Bereich von $10^{-4}$ zu 1 bis 0,5 zu 1, besonders bevorzugt im Bereich von $5*10^{-3}$ zu 1 bis $5*10^{-2}$ zu 1.

Zur Durchführung der Polymerisation werden Katalysatoren eingesetzt, die mindestens ein Übergangsmetall umfassen. Hierbei kann jede Übergangsmetallverbindung eingesetzt werden, die mit dem Initiator, bzw. der Polymerkette, die eine übertragbare Atomgruppe aufweist, einen Redox-Zyklus bilden kann. Bei diesen Zyklen bilden die übertragbare Atomgruppe und der Katalysator reversibel eine Verbindung, wobei die Oxidationsstufe des Übergangsmetalls erhöht bzw. erniedrigt wird. Man geht davon aus, daß hierbei Radikale freigesetzt bzw. eingefangen werden, so daß die Radikalkonzentration sehr gering bleibt. Es ist allerdings auch möglich, daß durch die Addition der Übergangsmetallverbindung an die Übertragbare Atomgruppe die Insertion von ethylenisch ungesättigten Monomeren in die Bindung Y-X bzw. $Y(M)_z$-X ermöglicht bzw. erleichtert wird, wobei Y und X die zuvor genannten Bedeutung haben und M die Monomeren bezeichnet, während z den Polymerisationsgrad darstellt.

Bevorzugte Übergangsmetalle sind hierbei Cu, Fe, Cr, Co, Ne, Sm, Mn, Mo, Ag, Zn, Pd, Pt, Re, Rh, Ir, In, Yd, und/oder Ru, die in geeigneten Oxidationsstufen eingesetzt werden. Diese Metalle können einzeln sowie als Mischung eingesetzt werden. Es wird angenommen, daß diese Metalle die Redox-Zyklen der Polymerisation katalysieren, wobei beispielsweise das Redoxpaar $Cu^+/Cu^{2+}$ oder $Fe^{2+}/Fe^{3+}$ wirksam ist. Dementsprechend werden die Metallverbindungen als Halogenide, wie beispielsweise Chlorid oder Bromid, als Alkoxid, Hydroxid, Oxid, Sulfat, Phosphat, oder Hexafluorophosphat, Trifluormethansulfat der Reaktionsmischung zugefügt. Zu den bevorzugten metallischen Verbindungen gehören $Cu_2O$, CuBr, CuCl, CuI, $CuN_3$, CuSCN, CuCN, $CuNO_2$, $CuNO_3$, $CuBF_4$, $Cu(CH_3COO)$ $Cu(CF_3COO)$, $FeBr_2$, $RuBr_2$, $CrCl_2$ und $NiBr_2$.

Es können aber auch Verbindungen in höheren Oxidationsstufen, wie beispielsweise $CuBr_2$, $CuCl_2$, CuO, $CrCl_3$, $Fe_2O_3$ und $FeBr_3$, eingesetzt werden. In diesen Fällen kann die Reaktion mit Hilfe klassischer Radikalbildner, wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Es handelt sich hierbei um die Reverse-ATRP, wie diese von Wang und Matyjaszewski in Macromolekules (1995), Bd. 28, S. 7572-7573 beschrieben wurde.

Darüber hinaus können die Übergangsmetalle als Metall in der Oxidationsstufe null, insbesondere in Mischung mit den zuvor genannten Verbindungen zur Katalyse verwendet werden, wie dies beispielsweise in WO 98/40415 dargestellt ist. In diesen Fällen läßt sich. die Reaktionsgeschwindigkeit der Umsetzung erhöhen. Man nimmt an, daß hierdurch die Konzentration an katalytisch wirksamer Übergangsmetallverbindung erhöht wird, indem Übergangsmetalle in einer hohen Oxidationsstufe mit metallischem Übergangsmetall komproportionieren.

Das molare Verhältnis Übergangsmetall zu Initiator liegt im allgemeinen im Bereich von 0,0001:1 bis 10:1, vorzugsweise im Bereich von 0,001:1 bis 5:1 und besonders bevorzugt im Bereich von 0,01:1 bis 2:1, ohne daß hierdurch eine Beschränkung erfolgen soll.

Die Polymerisation findet in Gegenwart von Liganden statt, die mit dem oder den metallischen Katalysatoren eine Koordinationsverbindung bilden können. Diese Liganden dienen unter anderem zur Erhöhung der Löslichkeit der Übergangsmetallverbindung. Eine weitere wichtige Funktion der Liganden besteht darin, daß die Bildung von stabilen Organometallverbindungen vermieden wird. Dies ist besonders wichtig, da diese stabilen Verbindungen bei den gewählten Reaktionsbedingungen nicht polymerisieren würden. Des weiteren wird angenommen, daß die Liganden die Abstraktion der übertragbaren Atomgruppe erleichtern.

Diese Liganden sind an sich bekannt und beispielsweise in WO 97/18247, WO 98/40415 beschrieben. Diese Verbindungen weisen im allgemeinen ein oder mehrere Stickstoff-, Sauerstoff-, Phosphor- und/oder Schwefelatome auf, über die das Metallatom gebunden werden kann. Viele dieser Liganden lassen sich im allgemeinen durch die Formel $R^{16}$-Z-$(R^{18}$-$Z)_m$-$R^{17}$ darstellen, worin $R^{16}$ und $R^{17}$ unabhängig H, $C_1$ bis $C_{20}$ Alkyl, Aryl, Heterocyclyl bedeuten, die ggf. substituiert sein können. Zu diesen Substituenten zählen u. a. Alkoxyreste und die Alkylaminoreste. $R^{16}$ und $R^{17}$ können ggf. einen gesättigten, ungesättigten oder heterocyclischen Ring bilden. Z bedeutet O, S, NH, $NR^{19}$ oder $PR^{19}$, wobei $R^{19}$ die gleiche Bedeutung wie $R^{16}$ hat. $R^{18}$ bedeutet unabhängig eine divalente Gruppe mit 1 bis 40 C-Atomen, vorzugsweise 2 bis 4 C-Atomen, die linear, verzweigt oder cyclisch sein kann, wie beispielsweise eine Methylen-, Ethylen-, Propylen- oder Butylengruppe. Die Bedeutung von Alkyl und Aryl wurde zuvor dargelegt. Heterocyclylreste sind cyclische Reste mit 4 bis 12 Kohlenstoffatome, bei denen ein oder mehrere der $CH_2$-Gruppen des Ringes durch Heteroatomgruppen, wie O, S, NH, und/oder NR, ersetzt sind, wobei der Rest R, die gleich Bedeutung hat, wie $R^{16}$ hat.

Eine weitere Gruppe von geeigneten Liganden läßt sich durch die Formel

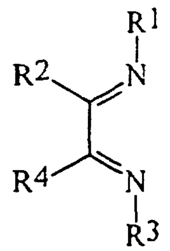

(IV)

darstellen, worin $R^1$, $R^2$, $R^3$ und $R^4$ unabhängig H, $C_1$ bis $C_{20}$ Alkyl-, Aryl-, Heterocyclyl- und/oder Heteroarylrest bedeuten, wobei die Reste $R^1$ und $R^2$ bzw. $R^3$ und $R^4$ zusammen einen gesättigten oder ungesättigten Ring bilden können.

Bevorzugte Liganden sind hierbei Chelatliganden, die N-Atome enthalten.

Zu den bevorzugten Liganden gehören unter anderem Triphenylphosphan, 2,2-Bipyridin, Alkyl-2,2-bipyridin, wie 4,4-Di-(5-nonyl)-2,2-bipyridin, 4,4-Di-(5-heptyl)-2,2 Bipyridin, Tris(2-aminoethyl)amin (TREN), N,N,N',N',N''-Pentamethyldiethylentriamin, 1,2,4,7,10,10-Hexamethyltriethlyentetramin und/oder Tetramethylethylendiamin. Weitere bevorzugte Liganden sind beispielsweise in WO 97/47661 beschrieben. Die Liganden können einzeln oder als Mischung eingesetzt werden.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand zu Übergangsmetall ist abhängig von der Zähnigkeit des Liganden und der Koordinationszahl des Übergangsmetalls. Im allgemeinen liegt das molare Verhältnis im Bereich 100:1 bis 0,1:1, vorzugsweise 6:1 bis 0,1:1 und besonders bevorzugt 3:1 bis 0,5:1, ohne daß hierdurch eine Beschränkung erfolgen soll.

Je nach erwünschter Polymerlösung werden die Monomere, die Übergangsmetallkatalysatoren, die Liganden und die Initiatoren ausgewählt. Es wird angenommen, daß eine hohe Geschwindigkeitskonstante der Reaktion zwischen dem Übergangsmetall-Ligand-Komplex und der übertragbaren Atomgruppe wesentlich für eine enge Molekulargewichtsverteilung ist. Ist die Geschwindigkeitskonstante dieser Reaktion zu gering, so wird die Konzentration an Radikalen zu hoch, so daß die typischen Abbruchreaktionen auftreten, die für eine breite Molekulargewichtsverteilung verantwortlich sind. Die Austauschrate ist beispielsweise abhängig von der übertragbaren Atomgruppe, dem Übergangsmetall, der Liganden und dem Anion der Übergangsmetallverbindung. Wertvolle Hinweise zur Auswahl dieser Komponenten findet der Fachmann beispielsweise in WO 98/40415.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 0° - 130°C und besonders bevorzugt 60° - 120°C.

Die Polymerisation kann mit oder ohne Lösungsmittel durchgeführt werden. Der Begriff des Lösungsmittels ist hierbei weit zu verstehen.

Vorzugsweise wird die Polymerisation in einem unpolaren Lösungsmittel durchgeführt. Hierzu gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle und synthetische Öle sowie Mischungen hiervon. Von diesen sind Mineralöle ganz besonders bevorzugt.

Mineralöle sind an sich bekannt und kommerziell erhältlich. Sie werden im allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Roh- oder Erdöls fallen. Im allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluß von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

Im allgemeinen unterscheidet man paraffinbasische, naphtenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen polare Eigenschaften zugesprochen werden. Der Anteil der n-Alkane beträgt in bevorzugten Mineralölen weniger als 3 Gew.-%,

der Anteil der O, N und/oder S-haltigen Verbindungen weniger als 6 Gew.-%. Der Anteil der Aromaten und der monomethylverzweigten Paraffine liegt im allgemeinen jeweils im Bereich von 0 bis 30 Gew.-%. Gemäß einem interessanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen ≥ 60 Gew.-%, vorzugsweise ≥ 80 Gew.-%, ohne daß hierdurch eine Beschränkung erfolgen soll.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:

n-Alkane mit ca. 18 bis 31 C-Atome:

0,7 - 1,0 %,

gering verzweigte Alkane mit 18 bis 31 C-Atome:

1,0 - 8,0 %,

Aromaten mit 14 bis 32 C-Atomen:

0,4 - 10,7 %,

Iso- und Cyclo-Alkane mit 20 bis 32 C-Atomen:

60,7- 82,4 %,

polare Verbindungen:

0,1 - 0,8 %,

Verlust:

6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle sind unter anderem organische Ester, organische Ether, wie Siliconöle, und synthetische Kohlenwasserstoffe, insbesondere Polyolefine. Sie sind meist etwas teurer als die mineralischen Öle, haben aber Vorteile hinsichtlich ihrer Leistungsfähigkeit. Zur Verdeutlichung soll noch auf die 5 API-Klassen der Grundöltypen (API: American Petroleum Institute) hingewiesen werden, wobei diese Grundöle besonders bevorzugt als Lösungsmittel eingesetzt werden können.

Diese Lösungsmittel können unter anderem in einer Menge von 1 bis 99 Gew.-%, bevorzugt von 5 bis 95 Gew.-%, besonders bevorzugt von 5 bis 60 Gew.-% und ganz besonders bevorzugt 10 bis 50 Gew.-%, bezogen auf das Gesamtgewicht der Mischung, eingesetzt werden, ohne daß hierdurch eine Beschränkung erfolgen soll.

Die so hergestellten Polymere weisen im allgemeinen ein Molekulargewicht im Bereich von 1 000 bis 1 000 000 g/mol, vorzugsweise im Bereich von $10*10^3$ bis $500*10^3$ g/mol und besonders bevorzugt im Bereich von $20*10^3$ bis $300*10^3$ g/mol auf, ohne daß hierdurch eine Beschränkung erfolgen soll. Diese Werte beziehen sich auf das Gewichtsmittel des Molekulargewichts der polydispersen Polymere in der Zusammensetzung.

Der besondere Vorteil von ATRP im Vergleich zur herkömmlichen radikalischen Polymerisationsverfahren besteht darin, daß Polymere mit enger Molekulargewichtsverteilung hergestellt werden können. Ohne daß hierdurch eine Beschränkung erfolgen soll, weisen die erfindungsgemäßen Polymere eine Polydispersität, die durch $M_w/M_n$ ge-

geben ist, im Bereich von 1 bis 12, vorzugsweise 1 bis 4,5, besonders bevorzugt 1 bis 3 und ganz besonders bevorzugt 1,05 bis 2 auf.

Verwendung finden erfindungsgemäße Copolymere unter anderem als Zusatz zu Schmierölen und Biodieselkraftstoffen, um den Pourpoint zu erniedrigen. Daher sind weitere interessante Aspekte der vorliegenden Erfindung Schmieröle und Biodieselkraftstoffe, welche erfindungsgemäße Copolymere enthalten.

Die erfindungsgemäßen Copolymere können einzeln oder als Mischung verwendet werden, wobei der Begriff Mischung weit zu verstehen ist. Hiervon werden sowohl Mischungen von verschiedenen Copolymeren der vorliegenden Erfindung als auch Mischungen von erfindungsgemäßen Copolymeren mit herkömmlichen Polymeren umfaßt.

Biodieselkraftstoffe sind an sich bekannt und bezeichnen natürliche, insbesondere nachwachsende Öle, die zum Betreiben von speziell angepaßten Dieselmotoren geeignet sind. Zu diesen Kraftstoffen gehören beispielsweise pflanzliche Öle, wie Rapsöl.

Beispiele für Schmieröle sind unter anderem Motorenöle, Getriebeöle, Turbinenöle, Hydraulikflüssigkeiten, Pumpenöle, Wärmeübertragungsöle, Isolieröle, Schneidöle und Zylinderöle.

Diese Schmieröle weisen im allgemeinen ein Grundöl sowie ein oder mehrere Additive auf, die in der Fachwelt weithin bekannt sind.

Als Grundöl ist im Prinzip jede Verbindung geeignet, die für eine hinreichenden Schmierfilm sorgt, der auch bei erhöhten Temperaturen nicht reißt. Zur Bestimmung dieser Eigenschaft können beispielsweise die Viskositäten dienen, wie sie beispielsweise für Motoröle in den SAE-Spezifikationen festgelegt sind.

Zu den hierfür geeigneten Verbindungen gehören unter anderem natürliche Öle, mineralische Öle und synthetische Öle sowie Mischungen hiervon.

Natürliche Öle sind tierische oder pflanzliche Öle, wie beispielsweise Klauenöle oder Jojobaöle. Mineralische Öle wurden zuvor als Lösungsmittel ausführlich beschrieben. Sie sind insbesondere hinsichtlich ihres günstigen Preises vorteilhaft. Synthetische Öle sind unter anderem organische Ester, synthetische Kohlenwasserstoffe, insbesondere Polyolefine, die den zuvor genannten Anforderungen genügen. Sie sind meist etwas teurer als die mineralischen Öle, haben aber Vorteile hinsichtlich ihrer Leistungsfähigkeit.

Diese Grundöle können auch als Mischungen eingesetzt werden und sind vielfach kommerziell erhältlich.

Die erfindungsgemäßen Copolymere können auch als Bestandteil von sogenannten DI-Paketen (Detergent-Inhibitor) oder anderen Konzentraten, die Schmierölen zugesetzt werden, eingesetzt werden, die weithin bekannt sind. Diese Konzentrate umfassen 15 bis 85 Gew.-% eines oder mehrerer Copolymere der vorliegenden Erfindung. Darüber hinaus kann das Konzentrat zusätzlich organische Lösungsmittel, insbesondere ein Mineralöl und/oder ein synthetisches Öl aufweisen.

Neben dem Grundöl enthalten Schmieröle oder die zuvor genannten Konzentrate im allgemeinen Additive. Zu diesen Additiven gehören unter anderem Viskositätsindexverbesserer, Antioxidantien, Alterungsschutzmittel, Korrosionsinhibitoren, Detergentien, Dispergentien, EP-Additive, Entschäumungsmittel, Reibungsminderer, Stockpunkterniedriger, Farbstoffe, Geruchsstoffe und/oder Demulgatoren.

Die Additive bewirken ein günstiges Fließverhalten bei tiefen und hohen Temperaturen (Verbesserung des Viskositätsindexes), sie suspendieren Feststoffe (Detergent-Dispersant-Verhalten), neutralisieren saure Reaktionsprodukte u. bilden einen Schutzfilm auf der Zylinderoberfläche (EP-Zusatz, für "extreme pressure"). Weitere wertvolle Hinweise findet der Fachmann in Ullmann's Encyclopedia of Industrial Chemistry, Fifth Edition auf CD-ROM, Ausgabe 1998.

Die Mengen, in denen diese Additive eingesetzt werden, sind von dem Anwendungsgebiet des Schmiermittels abhängig. Im allgemeinen beträgt der Anteil des Grundöls jedoch zwischen 25 bis 90 Gew.-%, bevorzugt 50 bis 75 Gew.-%. Der Anteil von Copolymeren der vorliegenden Erfindung in Schmierölen liegt vorzugsweise im Bereich von 0,01 bis 10 Gew.-%, besonders bevorzugt 0,01 bis 2 Gew.-%. Biodieselkraftstoffe weisen die Copolymere der vorliegenden Erfindung vorzugsweise in einer Menge im Bereich von 0,01 bis 10 Gew.-%, besonders bevorzugt 0,01 bis 2 Gew.-% auf.

Nachfolgend wird die Erfindung durch Beispiele und Vergleichsbeispiele eingehender erläutert, ohne daß die Erfindung auf diese Beispiele beschränkt werden soll.

Synthesebeispiele

Die ATRP-Polymerisationsversuche wurden in einem Rundkolben durchgeführt, der mit Säbelrührer, Heizpilz, Stickstoffüberleitung und Intensivkühler ausgestattet war. Dabei wurde das in Tabelle 1 angegebene Monomerengemisch zusammen mit 50 g Mineralöl der Fa. Petro Canada oder 50 g Toluol im Reaktionskolben vorgelegt und durch Trockeneiszugabe und Überleiten von Stickstoff inertisiert.

Anschließend wurde die Mischung unter Rühren auf 95°C erwärmt. Während des Aufwärmvorgangs wurden 0,32 g CuBr und 0,77 g PMDETA (Pentamethyldiethylentriamin) bei etwa 70°C zugegeben. Nach Erreichen der vorgegebenen Temperatur von 95°C wurden 0,43 g EBiB (Ethyl-2-bromisobutyrat) beigefügt.

Nach der einer Reaktionszeit von ca. 6 Stunden bei ca. 95°C wurde die Mischung auf Raumtemperatur abgekühlt, mit etwa 400 ml Toluol verdünnt und über 10 g $Al_2O_3$ filtriert, um Verunreinigungen abzutrennen. Danach wurde das verwendete Toluol mit einem Rotationsverdampfer abdestilliert. Diese Mischung wurde mittels GPC analysiert.

In Tabelle 1 bedeutet

CEMA ein Gemisch von langkettigen Methacrylaten, welches aus der Reaktion von Methylmethacrylat mit ®Nafol 1620 von Condea erhalten wurde;
LMA: ein Gemisch von langkettigen Methacrylaten, welches aus der Reaktion von Methylmethacrylat mit ®Lorol von Henkel KGaA erhalten wurde;
SMA: ein Gemisch von langkettigen Methacrylaten, welches aus der Reaktion von Methylmethacrylat mit ®Dehydad von Henkel KGaA erhalten wurde;
DPMA: ein Gemisch von langkettigen Methacrylaten, welches aus der Reaktion von Methylmethacrylat mit ®Dobanol 25L von Shell AG erhalten wurde. Bei diesen Reaktionen wurde freigesetztes Methanol abgetrennt.

Die Mengen der jeweils eingesetzten Komponenten sowie die erhaltenen Polymerisationsergebnisse, wie Zahlenmittel des Molekulargewichts Mn und Polydispersität PDI (=Mw/Mn) der erhaltenen Polymere sind in Tabelle 1 dargelegt.

Tabelle 1

| | Zusammensetzung der Monomeren | Lösungsmittel | Mn | PDI |
|---|---|---|---|---|
| Beispiel 1 | CEMA/LMA = 45/55 insgesamt 200 g | Toluol | 92900 | 2,01 |
| Beispiel 2 | CEMA/LMA = 45/55 insgesamt 400 g | Mineralöl | 180000 | 4,01 |
| Beispiel 3 | CEMA/LMA = 45/55 insgesamt 200 g | Mineralöl | 80300 | 1,98 |
| Beispiel 4 | CEMA/LMA = 45/55 insgesamt 200 g | Mineralöl | 54000 | 1,62 |
| Beispiel 5 | CEMA/LMA = 25/75 insgesamt 200 g | Mineralöl | 81200 | 1,49 |
| Beispiel 6 | SMA/DPMA = 22/78 insgesamt 200 g | Mineralöl | 86600 | 1,51 |

Die Synthese der Vergleichsbeispiele erfolgte gemäß US 5 368 761, wobei die Mengen der jeweils eingesetzten Komponenten sowie die erhaltenen Polymerisationsergebnisse, wie Zahlenmittel des Molekulargewichts Mn und Polydispersität PDI (=Mw/Mn) der erhaltenen Polymere in Tabelle 2 dargelegt sind.

Tabelle 2

| | Zusammensetzung der Monomeren | Lösungsmittel | Mn | PDI |
|---|---|---|---|---|
| Vergl. 1 | CEMA/LMA = 45/55 insgesamt 200 g | Toluol | 46100 | 2,11 |
| Vergl. 2 | CEMA/LMA = 25/75 insgesamt 200 g | Mineralöl | 79400 | 4,13 |
| Vergl. 3 | SMA/DPMA = 22/78 insgesamt 200 g | Mineralöl | 45000 | 1,96 |

Anwendungsbeispiele

In den nachfolgenden Versuchen wurden die Stockpunkte gemäß ASTM D 97-93, die MRV-Werte gemäß ASTM 4684-92 und die Scanning-Brookfield-Resultate nach ASTM D 5133-90 bestimmt. Der Gelation-Index ist das Maximum der ersten mathematischen Ableitung des Viskositäts-Temperatur-Diagrammms der Scanning-Brookfield-Messung. Hinsichtlich des Yield-Stress-Wertes der MRV-Messung sollte berücksichtigt werden, daß Meßwerte kleiner als 35 Pa aufgrund der Meßgenauigkeit mit dem Wert 0 angegeben sind.

Die gemäß den obigen Synthesen erhaltenen Polymere wurden auf ihre Wirksamkeit als Pourpointerniedriger getestet. Hierzu wurde eine Mischung von der in Tabelle 3 angegebene Menge des jeweiligen Polymeren mit einem 15W-40 (SAE) Mineralöl der Fa. Farmland (Beispiele 1 - 4) bzw. einem recycelten 15W-40 (SAE) Mineralöl der Fa. Farmland (Beispiele 5, 6) hergestellt und gemäß den zuvor angegebenen Methoden untersucht. Die erhaltenen Ergebnisse sind ebenfalls in Tabelle 3 zusammengefaßt.

Tabelle 3

| Polymer gemäß | Polymer-gehalt [Gew.-%] | Stockpunkt | MRV | |
|---|---|---|---|---|
| | | | Viscosität [Pa*s] | Yield Stress [Pa] |
| Beispiel 1 | 0,03 | -33 | 13,5 | 0 |
| Vergl. 1 | 0,03 | -27 | 143,7 | 105 |
| Beispiel 2 | 0,06 | -30 | 14,5 | 0 |
| Beispiel 3 | 0,06 | -33 | 13,5 | 0 |
| Beispiel 4 | 0,06 | -33 | 14,6 | 0 |
| Vergl. 1 | 0,06 | -33 | 54,3 | 70 |
| Beispiel 5 | 0,04 | -36 | 34,9 | 0 |
| Vergl. 2 | 0,04 | -36 | 66,4 | 35 |
| Vergl. 2 | 0,08 | -36 | 37,3 | 0 |
| Beispiel 6 | 0,08 | -36 | 20,8 | 0 |
| Vergl. 3 | 0,08 | -36 | 52,0 | 70 |

Tabelle 3

| (Fortsetzung) | | | | |
|---|---|---|---|---|
| Polymer gemäß | Polymer gehalt [Gew.-%] | Scanning-Brookfield | | |
| | | Viskosität bei -20°C [mPa*s] | Temp. bei 30 Pa*s [°C] | Gelation Index bei °C |
| Beispiel 1 | 0,03 | 7100 | -29,3 | 4,7 bei -32 |
| Vergl. 1 | 0,03 | 30200 | -20 | 18,5 bei -15 |
| Beispiel 2 | 0,06 | 7200 | -28,5 | 6,1 bei -11 |
| Beispiel 3 | 0,06 | 7400 | -29,3 | 4,4 bei -31 |
| Beispiel 4 | 0,06 | 7500 | -28,7 | 4,8 bei -18 |
| Vergl. 1 | 0,06 | 8400 | -28 | 6,1 bei -16 |
| Beispiel 5 | 0,04 | 38000 | -18,3 | 13 bei -13 |
| Vergl. 2 | 0,04 | fest | -17,1 | 15,1 bei -12 |
| Vergl. 2 | 0,08 | 24100 | -21,8 | 9,1 bei -13 |
| Beispiel 6 | 0,08 | 11400 | -26,6 | 4 bei -20 |
| Vergl. 3 | 0,08 | 38100 | -18,1 | 13,1 bei -12 |

**Patentansprüche**

**1.** Copolymere, dadurch erhältlich, daß man ethylenisch ungesättigte Monomere mittels Initiatoren, die eine übertragbare Atomgruppe aufweisen, und einem oder mehreren Katalysatoren, die mindestens ein Übergangsmetall umfassen, in Gegenwart von Liganden, die mit dem oder den metallischen Katalysatoren eine Koordinationsverbindung bilden können, polymerisiert, wobei die Mischung der ethylenisch ungesättigten Monomeren aus

a) 0 bis 40 Gew.-% einer oder mehreren ethylenisch ungesättigten Esterverbindungen der Formel (I)

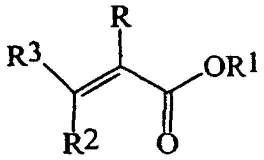

(I),

worin R Wasserstoff oder Methyl darstellt, $R^1$ einen linearen oder verzweigten Alkylrest mit 1 bis 5 Kohlenstoffatomen bedeutet, $R^2$ und $R^3$ unabhängig Wasserstoff oder eine Gruppe der Formel -COOR' darstellen, worin R' Wasserstoff oder eine Alkylgruppe mit 1 bis 5 Kohlenstoffatomen bedeutet,

b) 10 bis 98 Gew.-% einer oder mehreren ethylenisch ungesättigten Esterverbindungen der Formel (II)

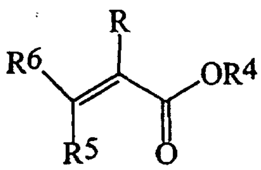

(II),

worin R Wasserstoff oder Methyl darstellt, $R^4$ einen linearen oder verzweigten Alkylrest mit 6 bis 15 Kohlenstoffatomen bedeutet, $R^5$ und $R^6$ unabhängig Wasserstoff oder eine Gruppe der Formel -COOR'' darstellen, worin R'' Wasserstoff oder eine Alkylgruppe mit 6 bis 15 Kohlenstoffatomen bedeutet,

c) 0 bis 80 Gew.-% einer oder mehreren ethylenisch ungesättigten Esterverbindungen der Formel (III)

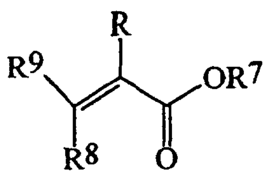

(III),

worin R Wasserstoff oder Methyl darstellt, $R^7$ einen linearen oder verzweigten Alkylrest mit 16 bis 30 Kohlenstoffatomen bedeutet, $R^8$ und $R^9$ unabhängig Wasserstoff oder eine Gruppe der Formel -COOR''' darstellen, worin R''' Wasserstoff oder eine Alkylgruppe mit 16 bis 30 Kohlenstoffatomen bedeutet,

d) 0 bis 50 Gew.-% Comonomer
besteht, wobei sich die Angabe Gew.-% jeweils auf das Gesamtgewicht der ethylenisch ungesättigten Monomere bezieht,

die Polymerisation in einem Mineralöl oder synthetischen Öl sowie Mischungen hiervon durchgeführt wird und die erhaltenen Polymere eine Polydispersität, die durch $M_w/M_n$ gegeben ist, im Bereich von 1 - 4,5 aufweisen.

**2.** Copolymer gemäß Anspruch 1 , **dadurch gekennzeichnet, daß** das Gewichtsmittel der Molmasse des Copolymers im Bereich von 10 000 - 500 000 g/mol liegt.

**3.** Copolymer gemäß einem oder mehreren der vorhergehenden Ansprüche, **dadurch gekennzeichnet, daß** die Polydispersität ($M_w/M_n$) im Bereich von 1,05 bis 2 liegt.

**4.** Konzentrat als Schmieröladditiv, **dadurch gekennzeichnet, daß** das Konzentrat 15 bis 85 Gew.-% eines oder mehrerer Copolymere gemäß einem oder mehreren der Ansprüche 1 bis 3 enthält.

**5.** Konzentrat gemäß Anspruch 4, **dadurch gekennzeichnet, daß** das Konzentrat zusätzlich organische Lösungsmittel, insbesondere ein Mineralöl und/oder ein synthetisches Öl aufweist.

6. Schmieröl aufweisend Copolymere gemäß einem oder mehreren der Ansprüche 1 bis 3.

7. Schmieröl gemäß Anspruch 6, **dadurch gekennzeichnet, daß** das Copolymere gemäß einem oder mehreren der Ansprüche 1 bis 3 in einer Menge im Bereich von 0,01 bis 10 Gew.-%, insbesondere 0,01 bis 2 Gew.-% vorhanden ist.

8. Konzentrat gemäß Anspruch 4 oder Schmieröl gemäß Anspruch 6, **dadurch gekennzeichnet, daß** zusätzlich Viskositätsindexverbesserer, Antioxidantien, Korrosionsinhibitoren, Detergentien, Dispergentien, EP-Additive, Entschäumungsmittel, Reibungsminderer und/oder Demulgatoren enthalten sind.

9. Biodieselkraftstoff aufweisend Copolymere gemäß einem oder mehreren der Ansprüche 1 bis 3.

10. Biodieselkraftstoff gemäß Anspruch 9, **dadurch gekennzeichnet, daß** das Copolymere gemäß einem oder mehreren der Ansprüche 1 bis 3 in einer Menge im Bereich von 0,01 bis 10 Gew.-%, insbesondere 0,01 bis 2 Gew.-% vorhanden ist.

11. Verfahren zur Herstellung von Copolymeren gemäß einem oder mehreren der Ansprüche 1 bis 3, **dadurch gekennzeichnet, daß** man sämtliche Monomere zu Beginn der Reaktion zugibt.

12. Verfahren zur Herstellung von Copolymeren gemäß einem oder mehreren der Ansprüche 1 bis 3, **dadurch gekennzeichnet, daß** man die Monomere kontinuierlich oder chargenweise zugibt.

13. Verfahren gemäß Anspruch 12, **dadurch gekennzeichnet, daß** man die Zusammensetzung der Monomeren während der Polymerisation variiert.

14. Verwendung von Copolymeren gemäß einem oder mehreren der Ansprüche 1 bis 3 als Stockpunktverbesserer oder Fließverbesserer.

## Claims

1. Copolymers which are obtainable by polymerising ethylenically unsaturated monomers using initiators which comprise a transferable atomic group, and one or more catalysts which comprise at least one transition metal, in the presence of ligands which are capable of forming a coordination compound with the metallic catalyst(s), the mixture of the ethylenically unsaturated monomers consisting of

a) 0 to 40 wt.% of one or more ethylenically unsaturated ester compounds of formula (I)

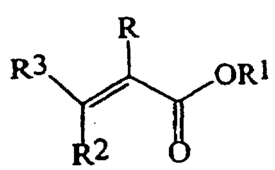 (I)

wherein R denotes hydrogen or methyl, $R^1$ denotes a straight-chain or branched alkyl group having 1 to 5 carbon atoms, $R^2$ and $R^3$ independently represent hydrogen or a group of the formula -COOR', wherein R' denotes hydrogen or an alkyl group having 1 to 5 carbon atoms,

b) 10 to 98 wt.% of one or more ethylenically unsaturated ester compounds of formula (II)

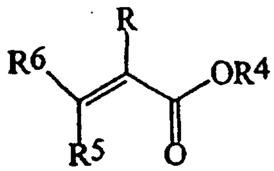

(II)

wherein R denotes hydrogen or methyl, $R^4$ denotes a straight-chain or branched alkyl group having 6 to 15, carbon atoms, $R^5$ and $R^6$ independently represent hydrogen or a group of the formula -COOR'', wherein R'' denotes hydrogen or an alkyl group having 6 to 15 carbon atoms,

c) 0 to 80 wt.% of one or more ethylenically unsaturated ester compounds of formula (III)

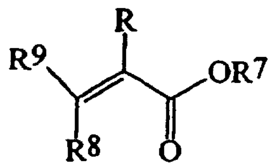

(III)

wherein R denotes hydrogen or methyl, $R^7$ denotes a straight-chain or branched alkyl group having 16 to 30 carbon atoms, $R^8$ and $R^9$ independently represent hydrogen or a group of the formula -COOR''', wherein R''' denotes hydrogen or an alkyl group having 16 to 30 carbon atoms,

d) 0 to 50 wt.% of comonomer,
the values for the wt.% in each case being based on the total weight of the ethylenically unsaturated monomers,

the polymerisation being carried out in a mineral oil or synthetic oil and mixtures thereof and the polymers obtained having a polydispersity, given as $M_w/M_n$, in the range from 1 to 4.5.

2. Copolymer according to claim 1, **characterised in that** the weight average molecular weight of the copolymer is in the range from 10,000 to 500,000 g/mol.

3. Copolymer according to one or more of the preceding claims, **characterised in that** the polydispersity ($M_w/M_n$) is in the range from 1.05 to 2.

4. A concentrate as a lubricating oil additive, **characterised in that** the concentrate contains 15 to 85 wt.% of one or more copolymers according to one or more of claims 1 to 3.

5. The concentrate according to claim 4, **characterised in that** the concentrate additionally contains organic solvents, particularly a mineral oil and/or a synthetic oil.

6. A lubricating oil containing copolymers according to one or more of claims 1 to 3.

7. The lubricating oil according to claim 6, **characterised in that** the copolymer according to one or more of claims 1 to 3 is present in an amount in the range from 0.01 to 10 wt.%, preferably 0.01 to 2 wt.%.

8. The concentrate according to claim 4 or the lubricating oil according to claim 6, **characterised in that** viscosity index improvers, antioxidants, corrosion inhibitors, detergents, dispersants, EP additives, antifoaming agents, friction reducing agents and/or demulsifiers are additionally contained therein.

9. Biodiesel fuel containing copolymers according to one or more of claims 1 to 3.

10. Biodiesel fuel according to claim 9, **characterised in that** the copolymer according to one or more of claims 1 to 3 is present in an amount in the range from 0.01 to 10 wt.%, preferably 0.01 to 2 wt.%.

**11.** Process for producing copolymers according to one or more of claims 1 to 3, **characterised in that** all the monomers are added at the start of the reaction.

**12.** Process for producing copolymers according to one or more of claims 1 to 3, **characterised in that** the monomers are added continuously or in batches.

**13.** Process according to claim 12, **characterised in that** the composition of the monomers varies during polymerisation.

**14.** Use of copolymers according to one or more of claims 1 to 3 as pour point depressants or flow improvers.

**Revendications**

**1.** Copolymères pouvant être obtenus par polymérisation de monomères éthyléniquement insaturés au moyen d'initiateurs qui présentent un groupe d'atomes transmissible, et d'un ou plusieurs catalyseurs qui renferment au moins un métal de transition, en présence de ligands qui peuvent former un composé de coordination avec le ou les catalyseurs métalliques, le mélange de monomères éthyléniquement insaturés étant constitué de

a) 0 à 40 % en poids d'un ou plusieurs composés d'esters éthyléniquement insaturés répondant à la formule (I)

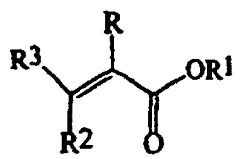

(I)

dans laquelle R représente un atome d'hydrogène ou un groupe méthyle, $R^1$ un radical alkyle linéaire ou ramifié portant 1 à 5 atomes de carbone, $R^2$ et $R^3$, indépendamment l'un de l'autre, un atome d'hydrogène ou un groupe de formule -COOR', dans laquelle R' représente un atome d'hydrogène ou groupe alkyle portant 1 à 5 atomes de carbone,

b) 10 à 98 % en poids d'un ou plusieurs composés d'esters éthyléniquement insaturés répondant à la formule (II)

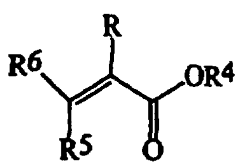

(II)

dans laquelle R représente un atome d'hydrogène ou un groupe méthyle, $R^4$ un radical alkyle linéaire ou ramifié portant 6 à 15 atomes de carbone, $R^5$ et $R^6$, indépendamment l'un de l'autre un atome d'hydrogène ou un groupe de formule -COOR", dans laquelle R" représente un atome d'hydrogène ou un groupe alkyle portant 6 à 15 atomes de carbone,

c) 0 à 80 % en poids d'un ou plusieurs composés d'esters éthyléniquement insaturés répondant à la formule (III)

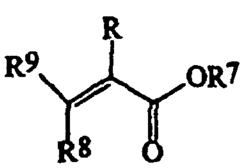

(III)

dans laquelle R représente un atome d'hydrogène ou un groupe méthyle, $R^7$ un radical alkyle linéaire ou ramifié portant 16 à 30 atomes de carbone, $R^8$ et $R^9$, indépendamment l'un de l'autre, un atome d'hydrogène

ou un groupe de formule -COOR''', dans laquelle R''' représente un atome d'hydrogène ou un groupe alkyle portant 16 à 30 atomes de carbone,
d) 0 à 50 % en poids de comonomère,
l'indication en % en poids se rapportant chaque fois au poids total des monomères éthyléniquement insaturés, la polymérisation étant réalisée dans une huile minérale ou une huile synthétique ainsi que dans des mélanges de ces huiles et les polymères obtenus présentant une polydispersité, donnée par $M_w/M_n$, de l'ordre de 1 à 4,5.

2. Copolymère selon la revendication 1,
**caractérisé en ce que**
la moyenne pondérale de la masse molaire du copolymère est de l'ordre de 10 000 à 500 000 g/mole.

3. Copolymère selon l'une quelconque ou plusieurs des revendications précédentes,
**caractérisé en ce que**
la polydispersité ($M_w/M_n$) est de l'ordre de 1,05 à 2.

4. Concentré en tant qu'additif d'huile de graissage,
**caractérisé en ce qu'**
il contient 15 à 85 % en poids d'un ou plusieurs copolymères selon l'une quelconque ou plusieurs des revendications 1 à 3.

5. Concentré selon la revendication 4,
**caractérisé en ce qu'**
il présente en plus des solvants organiques, en particulier une huile minérale et/ou une huile synthétique.

6. Huile de graissage présentant des copolymères selon l'une quelconque ou plusieurs des revendications 1 à 3.

7. Huile de graissage selon la revendication 6,
**caractérisée en ce que**
le copolymère selon l'une quelconque ou plusieurs des revendications 1 à 3 est présent dans une quantité de l'ordre de 0,01 à 10 % en poids, en particulier de 0,01 à 2 % en poids.

8. Concentré selon la revendication 4 ou huile de graissage selon la revendication 6,
**caractérisé en ce qu'**
il/elle contient en plus des améliorants de l'indice de viscosité, des antioxydants, des inhibiteurs de la corrosion, des détergents; des dispersants, des additifs EP, des agents anti-moussants, des réducteurs de frottements et/ou des désémulsifiants.

9. Carburant biodiesel présentant des copolymères selon l'une quelconque ou plusieurs des revendications 1 à 3.

10. Carburant biodiesel selon la revendication 9,
**caractérisé en ce que**
le copolymère selon l'une quelconque ou plusieurs des revendications 1 à 3 est présent dans une quantité de l'ordre de 0,01 à 10 % en poids, en particulier de 0,01 à 2 % en poids.

11. Procédé de fabrication de copolymères selon l'une quelconque ou plusieurs des revendications 1 à 3,
**caractérisé en ce qu'**
on ajoute tous les monomères au début de la réaction.

12. Procédé de fabrication de copolymères selon l'une quelconque ou plusieurs des revendications 1 à 3,
**caractérisé en ce qu'**
on ajoute les monomères en continu ou par charges.

13. Procédé selon la revendication 12,
**caractérisé en ce qu'**
on fait varier la composition des monomères pendant la polymérisation.

14. Utilisation de copolymères selon l'une quelconque ou plusieurs des revendications 1 à 3, en tant qu'améliorants du point de solidification ou améliorants de la fluidité.